# EUROPEAN PATENT SPECIFICATION

(11) **EP 3 568 809 B1**
(45) Date of publication and mention of the grant of the patent: **15.02.2023**
(21) Application number: 18702592.9
(22) Date of filing: 11.01.2018
(51) Int. Cl.: G06K 19/077

(54) **SMALL DIFFERENTIAL ELECTRIC FIELD ACTIVATED UHF RFID DEVICE**
DURCH KLEINES DIFFERENZIELLES ELEKTRISCHES FELD AKTIVIERTE UHF-RFID-VORRICHTUNG
PETIT DISPOSITIF RFID UHF ACTIVÉ PAR CHAMP ÉLECTRIQUE DIFFÉRENTIEL

(30) Priority: 11.01.2017 US 201762444823 P
(43) Date of publication of application: 20.11.2019
(73) Proprietor: Avery Dennison Retail Information Services LLC, Mentor, OH 44060 (US)
(72) Inventor: FORSTER, Ian J., Chelmsford Essex CM1 6LA (GB)
(74) Representative: Müller-Boré & Partner Patentanwälte PartG mbB
(86) International application number: PCT/US2018/013327
(87) International publication number: WO 2018/132574

(56) References cited:
- US-A1- 2007 017 986
- US-A1- 2015 256 231
- US-A9- 2016 006 113

## Description

### BACKGROUND

"Smart labels," also called "smart tags," are print-coded labels which incorporate extremely flat configured transponders as an inlay inside the label. These transponders typically include a chip, an antenna, and bonding wires.

In many processes, such as in logistics and transportation, "smart labels" or "intelligent labels" have been replacing more conventional optical barcodes, as well as 2D barcodes, QR codes and the like, as the key means by which items can be identified and tracked. The automation of such optical coding is limited in appropriate distance for reading success, and typically requires manual manipulation in order to bring the code into the vision range of a scanner (or, alternatively, requires the use of a scanner gate that scans the entire surface of a coded object). Smart labels, however, can be read from a distance, without having to be in the line of sight of the scanner and thus facilitate automation.

However, smart labels do have certain downsides. For example, smart labels are somewhat more susceptible to physical damage than optical barcodes. Smart labels are also somewhat more expensive to use than optical barcodes. While optical barcode labels can be printed using conventional label printers or even standard consumer-grade inkjet printers, smart labels must be printed using more specialized printers, and have a somewhat higher failure rate from printing (often around 5%). Lastly, smart labels can be somewhat larger and more obtrusive than optical barcode labels, limiting their usefulness in some applications. For example, "RFID Tickets" typically have large embedded antennae spanning a large portion of the ticket, meaning that a user may risk damaging the ticket and making it unusable by folding it.

US 2015/256231 A1 discloses a communication system, an information recording medium, and a relay communication device that allow communication via electromagnetic induction, allow the use of low-cost information recording media, improve communication stability when information recording media is misaligned or rotated, and provide high IC-chip tolerance to flexion in information recording media. An information recording medium has: an IC chip that is capable of communication via electromagnetic induction; and a pair of thin conductive sheets connected to the IC chip. A relay medium has thin conductive sheets and a loop antenna, with one of said thin conductive sheets connected to one end of the loop antenna and the other thin conductive sheet connected to the other end of the loop antenna. A read/write device has a loop antenna.

US 2016/006113 A9 discloses a system and method for an antenna coupler mechanism. The antenna coupler mechanism includes a first tuning leg, a second tuning leg, and a bottom plate. The first tuning leg includes a first inductive circuit element, the first tuning leg being configured to accept a radio frequency device in series with the first inductive circuit element. The second tuning leg includes a second inductive circuit element and a capacitive circuit element connected in series, the second tuning leg being connected electrically in parallel with the first tuning leg. In addition, the bottom plate includes a third inductive circuit element connected electrically in parallel with the first tuning leg and connected electrically in parallel with the second tuning leg, the bottom plate being configured to couple energy into a nearby structure.

US 2007/017986 A1 discloses techniques for a radio frequency identification (RFID) device. The device includes a slot antenna having at least one slot disposed in a first substrate. A strap is disposed across the slot. The strap includes a second substrate and an integrated circuit. The integrated circuit is electrically coupled to the slot antenna. In a specific embodiment, a thickness of a metal slot antenna is at least ¼th an inch. The RFID device can also be associated with a location, and be attached to a pallet rack.

Thus, according to an aspect, the problem relates to providing an RFID pairing system using less expensive smart labels with a lower failure rate and a method of operating such smart labels.

This problem is solved by an RFID pairing system having the features of claim 1 and by a method of operating a differential electric field activated UHF RFID device having the features of claim 7, respectively. Preferred embodiments are defined in the respective dependent claims.

### SUMMARY

According to an exemplary embodiment, a small differential-electric-field-activated UHF RFID device may be disclosed. Such a device may be small and easy to manufacture, improving the viability of incorporating RFID technology into articles like tickets, cards, and tokens. Such a device may also be small and inexpensive enough to allow for redundant RFID chips to be placed on an article, improving the survivability of an RFID-enabled article. Such a device may also reduce the amount of metal or plastic that is used in order to create an article such as a smart ticket or card, improving recyclability.

### BRIEF DESCRIPTION OF THE FIGURES

Advantages of embodiments of the present invention will be apparent from the following detailed description of the exemplary embodiments thereof, which description should be considered in conjunction with the accompanying drawings in which like numerals indicate like elements, in which:
FIG. 1 is an exemplary embodiment of a coupler and strap pairing.
FIG. 2 is an exemplary embodiment of a coupler and strap pairing.
FIG. 3 is an exemplary diagram illustrating coupling by capacitance.
FIG. 4 is an exemplary embodiment of a side view of a coupler.
FIG. 5 is an exemplary embodiment of a side view of a coupler.
FIG. 6 is an exemplary embodiment of an RFID device.
FIG. 7 is an exemplary embodiment of an RFID device that has been added to a ticket.
FIG. 8 is an exemplary diagram illustrating the use of a ticket equipped with an RFID device.
FIG. 9 is an exemplary diagram illustrating the use of an RFID device with a surface that provides coupling regardless of relative, X, Y and theta orientation.
FIG. 10 is an exemplary embodiment of an RFID device as coupled to a far-field antenna.

### DETAILED DESCRIPTION

Aspects of the invention are disclosed in the following description and related drawings directed to specific embodiments of the invention. Alternate embodiments may be devised without departing from the scope of the claims of the invention. Additionally, well-known elements of exemplary embodiments of the invention will not be described in detail or will be omitted so as not to obscure the relevant details of the invention. Further, to facilitate an understanding of the description discussion of several terms used herein follows.

As used herein, the word "exemplary" means "serving as an example, instance or illustration" and not according to the invention. The embodiments described herein are not limiting, but rather are exemplary only. It should be understood that the described embodiments are not necessarily to be construed as preferred or advantageous over other embodiments. Moreover, the terms "embodiments of the invention", "embodiments" or "invention" do not require that all embodiments of the invention include the discussed feature, advantage or mode of operation.

Further, some embodiments may be described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

According to an exemplary embodiment, and referring generally to the Figures, various exemplary implementations of a small differential-electric-field-activated UHF RFID device ("RFID device") may be disclosed. In some embodiments, such an RFID device may also be referred to as a "interposer" or comprising a "RFID strap." In one embodiment presently contemplated, a form of differential electric field device utilized a dipole antenna, with a total length of half wave at the operating frequency, approximately 152.5mm at FCC band. In one example of the present invention, a device is provided where the total length is less than 1/30th of a wavelength at the operating band, approximately 10.2mm. It is important to note, however, that the present application is not limited to any particular size.

According to an exemplary embodiment, an RFID device may be designed to be small and easy to manufacture in high volume. The low cost and small size may each improve the viability of incorporating the device into smaller, thinner, and/or lower-cost articles such as tickets, cards (such as payment cards or identification cards) and tokens, allowing such articles to be equipped with RFID technology under circumstances that were not possible or practical before. In some exemplary embodiments, an article may even be equipped with multiple redundant RFID devices in order to improve reliability, allowing the article to still be read by an RFID reader in the event that one or more of the RFID devices breaks or is rendered unusable.

According to an exemplary embodiment, the small size of the RFID device may serve to decrease the amount of metal and plastic that is used to manufacture the RFID device. This may have advantages for manufacturing, but may also serve to make RF!D-equipped articles more recyclable.

According to an exemplary embodiment, an RFID device may have approximate measurements of 5mm by 10mm. According to another exemplary embodiment, an RFID device may be larger than these dimensions in order to improve readability, may be smaller than these dimensions in some applications (such as where it may be practical to have a higher-precision reader) or may have any other measurements, as desired. According to an exemplary embodiment, the tabs of the RFID device may be a small fraction of the wavelength used at the operating frequency.

In order to read the RFID device, according to some exemplary embodiments, the RFID device may be put in connection with a coupler. In an exemplary embodiment, the coupler may be or may include, for example, two plates, between which may exist a differential electric field designed to operate the RFID device.

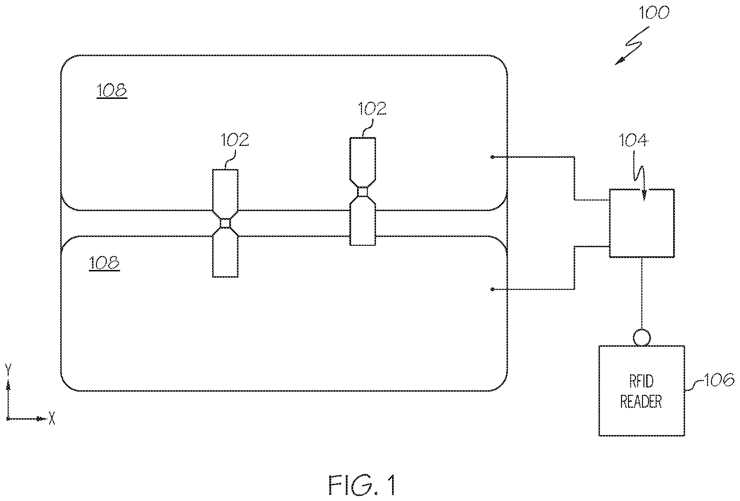

Turning now to exemplary Figure 1, Figure 1 displays an exemplary embodiment of a pairing 100 between an RFID strap 102 and a coupler 104.In the exemplary embodiment of Figure 1, a coupler 104 may include one or more sets of a metallic structure that has at one or more points creating a differential electric field such as coupler plates 108, which may be connected to an RFID reader 106. In an exemplary embodiment, the coupler plates 108 may be disposed near one another (they may, for example, run parallel or substantially parallel to one another) and may be separated by a gap disposed between them. While the present invention speaks to the utilization of coupler plates 108, it is not limited to such and contemplates the utilization of any metallic structure known in the art, such as a bridge, to create a differential electric field.

A differential electric field may be provided between the coupler plates 108 of the coupler 104. Such a differential electric field may be provided by, for example, the RFID reader 106, or by another component, as desired. Such a differential electric field may act to operate the RFID strap 102 when the RFID strap 102 is brought into close connection with the coupler plates 108 of the coupler 104.

According to an exemplary embodiment, an X direction and a Y direction may be established, such that, for example, the X direction runs horizontally and the Y direction runs vertically, as shown in Figure 1. In the exemplary embodiment shown in Figure 1, the X direction may be parallel to the length of the gap between the coupler plates 108, and the Y direction may be perpendicular to this direction.

According to an exemplary embodiment, a user may operate a coupler 104 by placing an RFID strap 102, which may be located on some other article configured to carry the RFID strap 102, over the coupler plates 108, such that the RFID strap 102 bridges the coupler plates 108. In an exemplary embodiment, a user may place the RFID strap 102, located on the carrier article, over the coupler 104, such that there is minimal variation of the RFID strap 102 in the Y direction. A user may then move the article in the X direction in order to move the RFID strap 102 in the X direction, over the coupler plates 108. In an exemplary embodiment, once the RFID strap 102 is placed so that it is in an appropriate Y location on the coupler plates 108, it may be read.

According to an exemplary embodiment, there may be a significant amount of tolerance in the positioning of the RFID strap 102 to the coupler 104. There may be a significant amount of tolerance in each of the X, the Y, and the Z directions; in other exemplary embodiments, there may be less tolerance in any of the directions or in any combination of directions. This may ensure that, for example, the RFID strap 102 may be located at a point having at least some Y offset and can still be read. The positional tolerance is related to the size of the strap pads and the pads and the structures the strap(s) couples to. In one example, the strap pads may be smaller than the plates they are coupling to; for example, the strap pads may be 2mm x 2mm. In one embodiment, coupler pads may be 3mm x 3mm in size. In this instance, a +/-0.5mm movement of the strap in relation to the coupler pad (s) will not change the overlap area between the strap and coupler pad maintain a constant coupling.

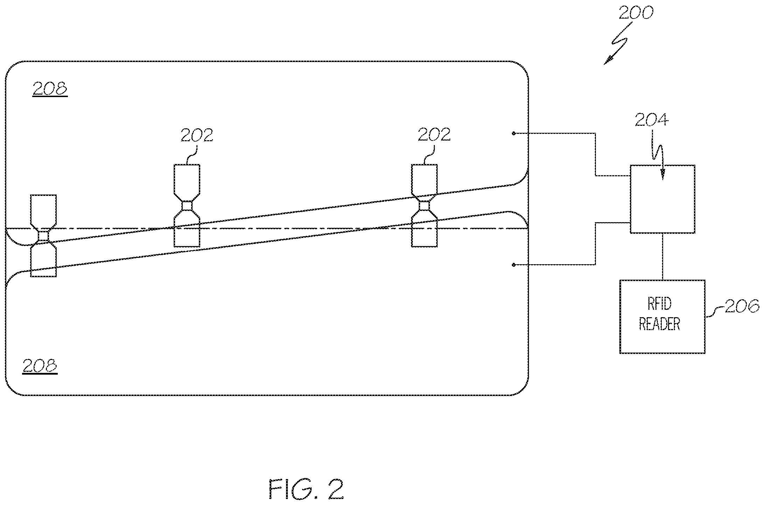

Turning now to exemplary Figure 2, Figure 2 displays an alternative exemplary embodiment of a pairing 200 between an RFID strap 202 and a coupler 204, which may include one or more sets of coupler plates 208 connected to an RFID reader 206. In an exemplary embodiment, the coupler plates 208 may be disposed near one another (they may, for example, run parallel or substantially parallel to one another) and may be separated by a gap disposed between them.

According to an exemplary embodiment, rather than being disposed parallel to the X direction, the gap provided between the coupler plates 208 may be disposed at an angle such that the gap varies with the X direction. This may ensure that, when RFID straps 202 are introduced in the X direction and are misplaced in the Y direction, the RFID straps 202 will go over an area that has a differential field coupling to each of the two sides of the strap 202.

For example, a coupler 204 having a pair of coupler plates 208 may also be provided with two points, B and C, shown in Figure 2. According to an exemplary embodiment, an RFID strap 202 may be introduced having a certain position along the Y axis. At B, the position of the RFID strap 202 along the Y axis may have too large an offset to be successfully read, and as such the RFID strap 202 may not be read at point B. However, at point C, the position of the RFID strap 202 along the Y axis may coincide with the position of the gap between the coupler plates 208, and as such the RFID strap 202 may be readable.

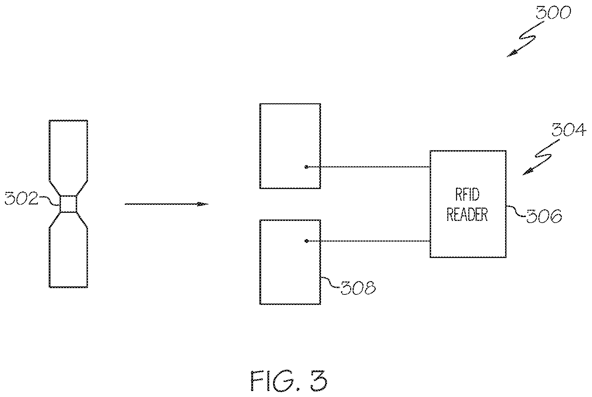

Turning now to exemplary Figure 3, Figure 3 displays an exemplary diagram illustrating the process of coupling by capacitance 300 using an RFID strap 302 and an RFID coupler 304.

To provide appropriate background, in general, RFID capacitive coupling may be used for short ranges wherein close RFID coupling (i.e. around 1 cm) is needed. Such a system may make use of capacitive effects to provide coupling between the RFID tag and the RFID reader. This system can be used for, for example, smart cards under ISO 10536.

Essentially, in capacitive coupling, an RFID tag may make use of electrodes (specifically the plates of a capacitor) rather than an antenna or a coil in order to provide the required coupling between the RFID tag and the RFID reader. In capacitive coupling, an RFID tag may be placed in close proximity to an RFID reader. The capacitance between the RFID tag and the RFID reader may provide a capacitor through which a signal can be transmitted; in some exemplary embodiments, this may further require an earth return. Once this capacitor has been established, an AC signal may be transmitted through it by the reader, and the AC signal generated by the reader may be picked up and rectified within the RFID tag and used to power the devices within the tag. The data may then be returned to the RFID reader by modulation of the load.

As such, according to the exemplary embodiment shown in Figure 3, an RFID strap 302 - a very small differential electric field device - may be brought into proximity with the coupling plates 308 of a coupler 304, which may further have an RFID reader 306. According to an exemplary embodiment, the RFID strap 302 may then be read by the RFID reader 306.

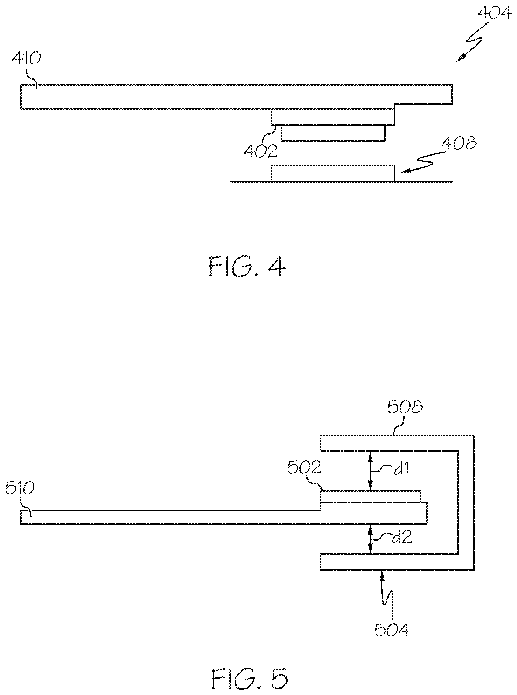

Turning now to exemplary Figure 4, Figure 4 shows an exemplary embodiment of a side view of a coupler 404. According to an exemplary embodiment, a coupler 404 may have a plurality of coupler plates 408, which may all point along the same axis; for example, according to an exemplary embodiment, a coupler 404 may have two coupler plates 408 facing up, facing down, or facing sideways.

According to an exemplary embodiment, a user may insert a carrier plate 410 upon which may be disposed an RFID strap 402. The RFID strap 402 may be positioned over the coupler plate 408 such that it is spaced a distance "d" apart from the coupler plate 408. The capacitance and coupling of the coupler-strap pairing may be reduced as d is increased, meaning that, in some exemplary embodiments, the RFID strap 402 may have to be directly placed on top of the coupler plate 408 in order to be read.

Turning now to exemplary Figure 5, Figure 5 shows an embodiment according to the invention of a side view of a coupler 504. Instead of a coupler 404 having coupler plates 408 disposed on only one surface, a coupler 504 instead has a coupling aperture 508. In such an embodiment, the RFID strap 502, on its carrier 510, is placed within the arms of a C-shaped structure 508. This may ensure that the RFID strap 502 is connected to the coupler 504 by two different capacitors (one on top and one below), rather than just one. An RFID strap 502 may be separated from the top or first portion of the coupling aperture 508 by a distance "d1" and may be separated from the bottom or second portion of the coupling aperture 508 by a distance "d2". As "d1" increases, "d2" may be decreased, and vice-versa. This may ensure that the total capacitance of the coupling that is associated with "d1" and "d2" is substantially constant.

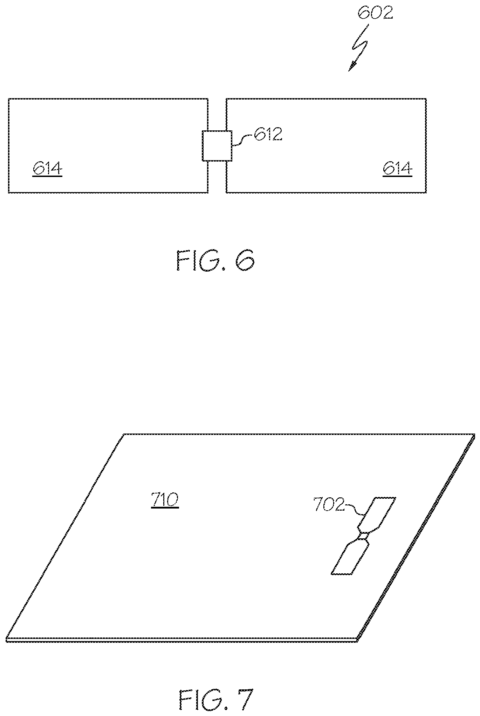

Turning now to exemplary Figure 6, Figure 6 shows an exemplary embodiment of an RFID strap 602. According to an exemplary embodiment, an RFID strap 602 may include a chip 612 and a plurality of attachment pads 614. According to an exemplary embodiment, a chip 612 may be centrally located between the attachment pads 614, each of which may be the same size; according to another exemplary embodiment, a chip 612 may be located elsewhere.

According to some exemplary embodiments, an RFID strap 602 may be printed on the substrate, such as paper, PE or PET substrate, which may surround the attachment pads 614. In another exemplary embodiment, attachment pads 614 may be free-standing components, as desired.

According to an exemplary embodiment, an RFID strap 602 may, when fully assembled, extend approximately 10 mm in the X direction and approximately 5 mm in the Y direction, as shown in Figure 6. According to another exemplary embodiment, an RFID strap 602 may be a different size. According to an exemplary embodiment, the attachment pads 614 may be a small fraction of the size of a wavelength of a radio wave used at the operating frequency.

Turning now to exemplary Figure 7, Figure 7 displays an exemplary embodiment of an article 710 configured to carry an RFID strap 702. For example, according to an exemplary embodiment, an article 710 may be a payment card or a ticket to an event. In an exemplary embodiment, an RFID strap 702 may be centrally disposed on one end of the article 710; in another exemplary embodiment, RFID straps 702 may be disposed elsewhere on the article 710, or on multiple locations on the article 710.

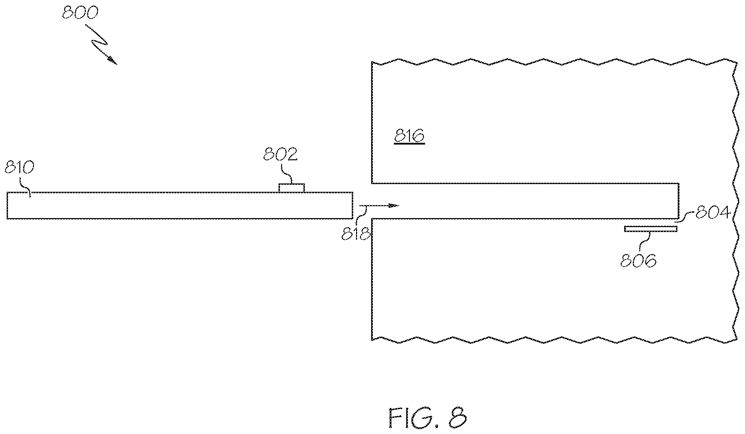

Turning now to exemplary Figure 8, Figure 8 displays an exemplary diagram demonstrating the use of an article 810 configured to carry an RFID strap 802. In order to scan the article 810, the user may insert the article 810 into a ticket or vending system 816 having a slot or aperture 818, in which a coupler 804 may be disposed. The article 810 may then be coupled to the coupler 804, and may be read by an RFID reader 806.

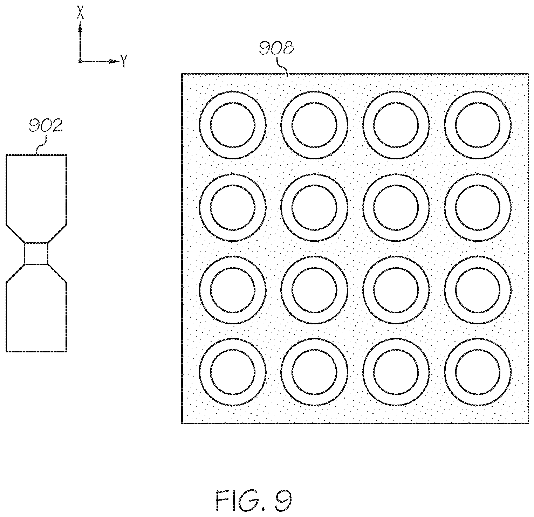

Turning now to Figure 9, Figure 9 displays an exemplary diagram illustrating the use of an RFID device 902 with a surface 908, specifically a coupling plate 908, which may provide coupling regardless of relative, X, Y and theta orientation. According to an exemplary embodiment, a surface 908 may provide a differential field for all values of X, Y, and theta, ensuring that, regardless of what the values are for X, Y, and theta, the RFID device 902 can be coupled.

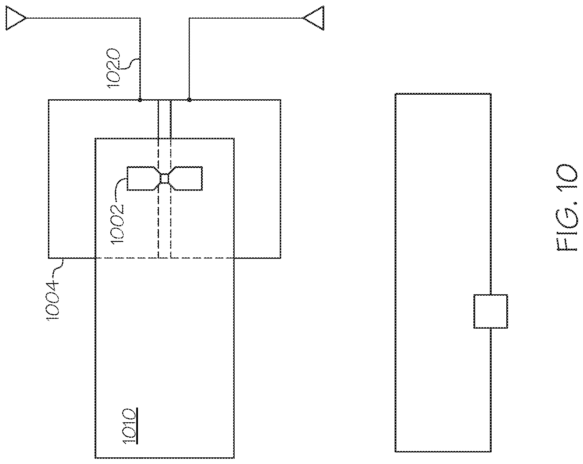

Turning now to exemplary Figure 10, Figure 10 displays an exemplary embodiment of an RFID device 1002 coupled to a far-field antenna 1020. According to an exemplary embodiment, it may be desired to locate an RFID reader at a location remote from the coupler 1004. According to such an exemplary embodiment, a far-field antenna 1020 may instead be connected to a coupler 1004. When an article 1010 featuring an RFID device 1002 is inserted into an appropriate location and coupled to the coupler 1004, the RFID reader at the remote location may communicate, through the far-field antenna 1020, with the RFID device 1002. This may allow for greater flexibility on the placement of reader structures inside machines or ticket reading stations.

The foregoing description and accompanying figures illustrate the principles, preferred embodiments and modes of operation of the invention. However, the invention should not be construed as being limited to the particular embodiments discussed above. Additional variations of the embodiments discussed above will be appreciated by those skilled in the art (for example, features associated with certain configurations of the invention may instead be associated with any other configurations of the invention, as desired).

Therefore, the above-described embodiments should be regarded as illustrative rather than restrictive. Accordingly, it should be appreciated that variations to those embodiments can be made by those skilled in the art without departing from the scope of the invention as defined by the following claims.

## Claims

1. An RFID pairing system comprising:
at least one differential electric field activated RFID device comprising an RFID strap (102, 502) and at least one coupler (104, 504);
wherein the at least one coupler (104, 504) comprises at least one metallic structure, which is configured to have one or more points creating a differential electric field;
wherein the at least one metallic structure comprises at least one pair of coupler plates (108, 508),
wherein the differential electric field exists between the at least one pair of
coupler plates (108, 508) of the at least one coupler (104, 504);
**characterized in that** the RFID device is a UHF RFID device and the pair of coupler plates are formed as a C-shaped structure with two arms, and
wherein the at least one strap (102, 502) of the RFID device is is placed within the arms of the C-shaped structure of the pair of coupler plates (108, 508) in the differential electric field

2. The system of claim 1, wherein the differential electric field is provided by an RFID reader (106).

3. The system of any one of the preceding claims, wherein the differential electric field operates the at least one strap (102, 502) when the at least one strap (102, 502) is brought into connection with the at least one pair of coupler plates (108, 508) and the at least one coupler (104, 504).

4. The system of any one of the preceding claims, wherein at least one gap separates the at least one pair of coupler plates (108, 508).

5. The system of claim 4, wherein an X direction and Y direction is established such that the X direction is parallel to a length of the at least one gap between the at least one pair of coupler plates (108, 508) and the Y direction is perpendicular to this direction.

6. The system of claim 4 or 5, wherein the at least one gap is at an angle such that the gap varies with an X direction.

7. A method of operating a differential electric field activated UHF RFID device comprising the steps of:
providing at least one differential electric field activated UHF RFID device comprising an RFID strap (102, 502);
providing a coupler (104, 504), wherein the at least one coupler (104, 504) comprises at least one set of coupler plates (108, 508) formed as a C-shaped structure with two arms which are configured to have one or more points creating a differential electric field;
wherein the differential electric field exists between the at least one set of coupler plates (108, 508) of the at least one coupler (104, 504);
placing the strap (102, 502) of the RFID device within the arms of the C-shaped structure of the at least one set of coupler plates (108, 508) and in the differential electric field; and
reading the RFID device.

8. The method of claim 7, wherein the method further comprises providing an article with the at least one RFID device and after placing the strap (102, 502) over the at least one set of coupler plates (108, 508), moving the strap (102, 502) in an X direction over the at least one set of coupler plates (108, 508).

9. The method of claim 7 or 8, wherein the at least one pair of coupler plates (108, 508) is provided with at least one point and the strap (102, 502) has a certain position along an axis.

10. The method of claim 9, wherein the strap (102, 502) is positioned along the axis at the at least one point.

11. The method of claim 10, wherein the method further comprises providing an RFID reader (106) such that the at least one RFID device is capacitively coupled to the RFID reader (106).

12. The method of any of the preceding claims 7 to 11, wherein the at least one set of coupler plates (108, 508) all point along a same axis.

13. The method of any of the preceding claims 7 to 12, wherein the strap (102, 502) is disposed on a carrier plate (410, 510).

## Patentansprüche

1. RFID-Kopplungssystem, aufweisend:
zumindest eine durch ein differenzielles elektrisches Feld aktivierte RFID-Vorrichtung, die ein RFID-Band (102, 502) und zumindest einen Koppler (104, 504) aufweist;
wobei der zumindest eine Koppler (104, 504) zumindest ein metallisches Gebilde aufweist, das so gestaltet ist, dass es ein oder mehr Punkte aufweist, die ein differentielles elektrisches Feld entstehen lassen;
wobei das zumindest eine metallische Gebilde zumindest ein Paar Kopplerplatten (108, 508) aufweist,
wobei das differentielle elektrische Feld zwischen dem zumindest einen Paar Kopplerplatten (108, 508) des zumindest einen Kopplers (104, 504) besteht;
**dadurch gekennzeichnet, dass** die RFID-Vorrichtung eine UHF-RFID-Vorrichtung ist und das Paar Kopplerplatten als ein C-förmiges Gebilde mit zwei Armen ausgebildet ist, und
wobei das zumindest eine Band (102, 502) der RFID-Vorrichtung innerhalb der Arme des C-förmigen Gebildes des Paars Kopplerplatten (108, 508) in dem differentiellen elektrischen Feld platziert ist.

2. System nach Anspruch 1, wobei das differentielle elektrische Feld von einem RFID-Lesegerät (106) bereitgestellt wird.

3. System nach einem der vorhergehenden Ansprüche, wobei das differentielle elektrische Feld das zumindest eine Band (102, 502) betreibt, wenn das zumindest eine Band (102, 502) mit dem zumindest einen Paar Kopplerplatten (108, 508) und dem zumindest einen Koppler (104, 504) in Verbindung gebracht wird.

4. System nach einem der vorhergehenden Ansprüche, wobei zumindest ein Spalt das zumindest eine Paar Kopplerplatten (108, 508) trennt.

5. System nach Anspruch 4, wobei eine X-Richtung und eine Y-Richtung derart eingerichtet sind, dass die X-Richtung parallel zu einer Länge des zumindest einen Spalts zwischen dem zumindest einen Paar Kopplerplatten (108, 508) ist und die Y-Richtung zu dieser Richtung senkrecht ist.

6. System nach Anspruch 4 oder 5, wobei der zumindest eine Spalt in einem Winkel verläuft, so dass der Spalt mit einer X-Richtung variiert.

7. Verfahren zum Betreiben einer durch ein differentielles elektrisches Feld aktivierten UHF-RFID-Vorrichtung, das die folgenden Schritte umfasst:
Bereitstellen zumindest einer durch ein differenzielles elektrisches Feld aktivierten UHF-RFID-Vorrichtung, die ein RFID-Band (102, 502) aufweist;
Bereitstellen eines Kopplers (104, 504), wobei der zumindest eine Koppler (104, 504) zumindest einen Satz Kopplerplatten (108, 508) aufweist, der als ein C-förmiges Gebilde mit zwei Armen ausgebildet ist, die so gestaltet sind, dass sie ein oder mehr Punkte aufweisen, die ein differentielles elektrisches Feld entstehen lassen;
wobei das differentielle elektrische Feld zwischen dem zumindest einen Satz Kopplerplatten (108, 508) des zumindest einen Kopplers (104, 504) besteht; Platzieren des Bands (102, 502) der RFID-Vorrichtung innerhalb der Arme des C-förmigen Gebildes des zumindest einen Satzes Kopplerplatten (108, 508) und in dem differentiellen elektrischen Feld; und
Lesen der RFID-Vorrichtung.

8. Verfahren nach Anspruch 7, wobei das Verfahren ferner das Bereitstellen eines Artikels mit der zumindest einen RFID-Vorrichtung und, nach Platzieren des Bands (102, 502) über den zumindest einen Satz Kopplerplatten (108, 508), Bewegen des Bands (102, 502) in einer X-Richtung über den zumindest einen Satz Kopplerplatten (108, 508) umfasst.

9. Verfahren nach Anspruch 7 oder 8, wobei das zumindest eine Paar Kopplerplatten (108, 508) mit zumindest einem Punkt versehen ist und das Band (102, 502) eine gewisse Position entlang einer Achse aufweist.

10. Verfahren nach Anspruch 9, wobei das Band (102, 502) an dem zumindest einen Punkt an der Achse entlang positioniert ist.

11. Verfahren nach Anspruch 10, wobei das Verfahren ferner das Bereitstellen eines RFID-Lesegeräts (106) umfasst, so dass die zumindest eine RFID-Vorrichtung kapazitiv mit dem RFID-Lesegerät (106) gekoppelt wird.

12. Verfahren nach einem der vorhergehenden Ansprüche 7 bis 11, wobei in dem zumindest einen Satz Kopplerplatten (108, 508) alle entlang derselben Achse ausgerichtet sind.

13. Verfahren nach einem der vorhergehenden Ansprüche 7 bis 12, wobei das Band (102, 502) auf einer Trägerplatte (410, 510) angeordnet ist.

## Revendications

1. Système d'appariement RFID, comprenant :
au moins un dispositif RFID activé par champ électrique différentiel comprenant une bande RFID (102, 502) et au moins un coupleur (104, 504) ;
dans lequel l'au moins un coupleur (104, 504) comprend au moins une structure métallique, qui est configurée pour avoir un ou plusieurs points créant un champ électrique différentiel ;
dans lequel l'au moins une structure métallique comprend au moins une paire de plaques de coupleur (108, 508),
dans lequel le champ électrique différentiel existe entre l'au moins une paire de plaques de coupleur (108, 508) de l'au moins un coupleur (104, 504) ;
**caractérisé en ce que** le dispositif RFID est un dispositif RFID UHF et la paire de plaques de coupleur sont formées en tant qu'une structure en forme de C avec deux bras, et
dans lequel l'au moins une bande (102, 502) du dispositif RFID est placée dans les bras de la structure en forme de C de la paire de plaques de coupleur (108, 508) dans le champ électrique différentiel.

2. Système selon la revendication 1, dans lequel le champ électrique différentiel est fourni par un lecteur RFID (106).

3. Système selon l'une quelconque des revendications précédentes, dans lequel le champ électrique différentiel fait fonctionner l'au moins une bande (102, 502) lorsque l'au moins une bande (102, 502) est amenée en connexion avec l'au moins une paire de plaques de coupleur (108, 508) et l'au moins un coupleur (104, 504).

4. Système selon l'une quelconque des revendications précédentes, dans lequel au moins un écart sépare l'au moins une paire de plaques de coupleur (108, 508).

5. Système selon la revendication 4, dans lequel une direction X et une direction Y sont créées de telle sorte que la direction X est parallèle à une longueur de l'au moins un écart entre l'au moins une paire de plaques de coupleur (108, 508) et la direction Y est perpendiculaire à cette direction.

6. Système selon la revendication 4 ou 5, dans lequel l'au moins un intervalle se trouve selon un angle tel que l'intervalle varie avec une direction X.

7. Procédé pour faire fonctionner un dispositif RFID UHF activé par champ électrique différentiel, comprenant les étapes :
de fourniture d'au moins un dispositif RFID UHF activé par champ électrique différentiel comprenant une bande RFID (102, 502) ;
de fourniture d'un coupleur (104, 504), dans lequel l'au moins un coupleur (104, 504) comprend au moins un ensemble de plaques de coupleur (108, 508) formées en tant qu'une structure en forme de C avec deux bras qui sont configurés pour présenter un ou plusieurs points créant un champ électrique différentiel ;
dans lequel le champ électrique différentiel existe entre l'au moins un ensemble de plaques de coupleur (108, 508) de l'au moins un coupleur (104, 504) ;
de placement de la bande (102, 502) du dispositif RFID dans les bras de la structure en forme de C de l'au moins un ensemble de plaques de coupleur (108, 508) et dans le champ électrique différentiel ; et
de lecture du dispositif RFID.

8. Procédé selon la revendication 7, dans lequel le procédé comprend en outre la fourniture d'un article avec l'au moins un dispositif RFID et, après le placement de la bande (102, 502) au-dessus de l'au moins un ensemble de plaques de coupleur (108, 508), le déplacement de la bande (102, 502) dans une direction X au-dessus de l'au moins un ensemble de plaques de coupleur (108, 508).

9. Procédé selon la revendication 7 ou 8, dans lequel l'au moins une paire de plaques de coupleur (108, 508) est fournie avec au moins un point et la bande (102, 502) présente une certaine position le long d'un axe.

10. Procédé selon la revendication 9, dans lequel la bande (102, 502) est positionnée le long de l'axe sur l'au moins un point.

11. Procédé selon la revendication 10, dans lequel le procédé comprend en outre la fourniture d'un lecteur RFID (106) de telle sorte que l'au moins un dispositif RFID est couplé de manière capacitive au lecteur RFID (106).

12. Procédé selon l'une quelconque des revendications 7 à 11, dans lequel l'au moins un ensemble de plaques de coupleur (108, 508) sont toutes dirigées le long d'un même axe.

13. Procédé selon l'une quelconque des revendications précédentes 7 à 12, dans lequel la bande (102, 502) est disposée sur une plaque de support (410, 510).
